# EUROPÄISCHE PATENTSCHRIFT

(11) **EP 2 714 475 B1**
(45) Veröffentlichungstag und Bekanntmachung des Hinweises auf die Patenterteilung: **28.03.2018**
(21) Anmeldenummer: 12727589.9
(22) Anmeldetag: 22.05.2012
(51) Int. Cl.: B60R 22/40

(54) **BAUGRUPPE FÜR EINEN GURTAUFROLLER**
ASSEMBLY FOR A BELT RETRACTOR
MODULE POUR UN ENROULEUR DE CEINTURE

(30) Priorität: 25.05.2011 DE 11103113
(43) Veröffentlichungstag der Anmeldung: 09.04.2014
(73) Patentinhaber: TRW Automotive GmbH, 73553 Alfdorf (DE)
(72) Erfinder: SIEBECK, Boris, 73527 Schwäbisch Gmünd (DE); SEHIC, Demal, 73525 Schwäbisch Gmünd (DE); ADOMEIT, Julius, 10961 Berlin (DE)
(74) Vertreter: ZF TRW Patentabteilung
(86) Internationale Anmeldenummer: PCT/EP2012/002161
(87) Internationale Veröffentlichungsnummer: WO 2012/159731

(56) Entgegenhaltungen:
- DE-U1- 20 006 314

## Beschreibung

Die Erfindung betrifft eine Baugruppe für einen Gurtaufroller mit einem fahrzeugsensitiven Sensor und einer Aufnahmevorrichtung für den Sensor. Die Erfindung betrifft ferner einen Gurtaufroller für einen Fahrzeug-Sicherheitsgurt mit einer solchen Baugruppe.

Gurtaufroller mit einem fahrzeugsensitiven Mechanismus zum Blockieren der Gurtspule umfassen einen Beschleunigungssensor mit einem Trägheitskörper, dessen Auslenkung den Blockiervorgang einleitet. Die Sensoren sind fest am Rahmen des Gurtaufrollers angebracht oder an diesen gekoppelt.

Nachteilig bei solchen Sensoren ist, dass sie im Fahrzeug eine bestimmte Orientierung einnehmen müssen, um eine sichere und zuverlässige Funktion zu gewährleisten. Da die Einbaulage des Gurtaufrollers im Fahrzeug jedoch variiert, insbesondere in Abhängigkeit vom Fahrzeugtyp, ist es in diesen Fällen erforderlich, verschiedene Varianten des Gurtaufrollers mit entsprechend unterschiedlichen Raumorientierungen des Sensors bereitzustellen.

Eine Baugruppe für einen Gurtaufroller und ein Gurtaufroller nach dem Oberbegriff der Ansprüche 1 und 9 sind aus der DE 200 06 314 U1 bekannt.

Vor diesem Hintergrund ist es die Aufgabe der Erfindung, einen flexibler einsetzbaren Gurtaufroller zu schaffen.

Gelöst wird die Aufgabe durch eine Baugruppe mit den Merkmalen des Anspruchs 1 sowie durch einen Gurtaufroller mit den Merkmalen des Anspruchs 9. Vorteilhafte und zweckmäßige Ausgestaltungen der erfindungsgemäßen Baugruppe und des erfindungsgemäßen Gurtaufrollers ergeben sich aus den Unteransprüchen.

Die erfindungsgemäße Baugruppe für einen Gurtaufroller mit einer Gurtspule und einem Rahmen umfasst einen fahrzeugsensitiven Sensor mit einem Sensorgehäuse, einem Trägheitskörper und einem Sensorhebel und eine Aufnahmevorrichtung für das Sensorgehäuse. Das Sensorgehäuse und die Aufnahmevorrichtung weisen geometrische Gestaltungen in Form von Rundungen einer Kugel auf, die zusammenwirken und so aufeinander abgestimmt sind, dass der Sensor in verschiedenen räumlichen Orientierungen und Raumachsen in die Aufnahmevorrichtung eingebaut werden kann.

Die Erfindung beruht auf der Erkenntnis, dass durch die Möglichkeit der Anpassung der Orientierung des Sensors relativ zum Rahmen des Gurtaufrollers die eingangs erläuterten Nachteile vermieden werden können. Die Aufnahmevorrichtung gibt nach wie vor eine ortsfeste Position für den Sensor am Gurtaufroller vor. Die besonderen räumlichen Gestaltungen des Sensors und der Aufnahmevorrichtung gemäß der Erfindung erlauben jedoch eine weitgehend frei wählbare Orientierung des Sensors, bevor er in der Aufnahmevorrichtung endgültig fixiert wird. Somit kann der Sensor an die spätere Einbaulage des Gurtaufrollers angepasst werden. Das Erfordernis, verschiedene Gurtaufrollervarianten bereitzustellen, entfällt, ohne dass hierfür zusätzliche Bauteile notwendig sind.

Ein weiterer Vorteil der erfindungsgemäßen Baugruppe besteht darin, dass durch die Änderung der Orientierung des Sensors in der Aufnahmevorrichtung eine Justierung des Sensors (im Sinne einer Einstellmöglichkeit der Sensorfunktionswerte) vorgenommen werden kann. Damit reduzieren sich auch die Werkzeugkosten.

Bewährt haben sich Blockermechanismen, die durch einen Sensor mit einem Trägheitskörper ausgelöst werden, der infolge von außen einwirkender Kräfte aus einer Ruhelage heraus bewegt werden kann. Abgestimmt auf einen solchen Trägheitskörper lässt sich die Orientierungsfreiheit des Sensors dadurch erreichen, dass die geometrische Gestaltung der Aufnahmevorrichtung eine innere Aufnahmefläche hat, die bezüglich des Mittelpunkts oder Schwerpunkts oder einer Kipp- oder Schwenkachse des Trägheitskörpers in dessen Ruhelage symmetrisch ist.

Dementsprechend sollte der Sensor, insbesondere ein den Trägheitskörper aufnehmendes Sensorgehäuse, eine Außenfläche haben, die bezüglich des Mittelpunkts oder Schwerpunkts oder einer Kipp- oder Schwenkachse des Trägheitskörpers in dessen Ruhelage symmetrisch ist.

Gemäß der bevorzugten Ausführungsform der Erfindung haben die innere Aufnahmefläche der Aufnahmevorrichtung und die Außenfläche des Sensors jeweils eine Rundung einer imaginären Kugel, deren Mittelpunkt mit dem Mittelpunkt oder Schwerpunkt des Trägheitskörpers zusammenfällt. Dies erlaubt ein stufenloses Verdrehen des Sensors in der Aufnahmevorrichtung in beliebigen Raumrichtungen, wobei die Position des Mittelpunkts des Trägheitskörpers relativ zur Aufnahmevorrichtung und damit zum Gurtaufroller immer gleich bleibt.

Seit einiger Zeit sind Gurtaufroller bekannt, die auf dem sogenannten "floating spool"-Konzept basieren. Bei diesem Gurtaufroller-Typ ist die Gurtspule selbst zwischen einer Freigabestellung und einer Blockierstellung bewegbar. Die Gurtspule ist dazu in einem Schwenkhebel gelagert und wird bei fahrzeugsensitiver Einsteuerung des Sensors durch die Zugkraft des Gurtbandes in eine Blockierverzahnung eingesteuert. Im Einklang mit der Erfindung kann an der Aufnahmevorrichtung ein Zwischenhebel schwenkbar gelagert werden, der durch eine Bewegung des Trägheitskörpers verschwenkbar ist. Dieser Zwischenhebel ist dann der Teil des fahrzeugsensitiven Blockiermechanismus, der durch Einsteuern in eine Steuerverzahnung der Gurtspule deren Verschiebung zur Blockierung am Rahmen des Gurtaufrollers einleitet.

Gemäß einem besonders bevorzugten Aufbau der erfindungsgemäßen Baugruppe ist zwischen dem Trägheitskörper und dem Zwischenhebel ein Sensorhebel angeordnet, der an einem den Trägheitskörper aufnehmenden Sensorgehäuse angebracht und relativ zum Sensorgehäuse schwenkbar gelagert ist. Der Sensorhebel überträgt die Bewegung des Trägheitskörpers aus dessen Ruhelage in Form einer definierten Schwenkbewegung auf den Zwischenhebel.

Insbesondere für einen um den Mittel- oder Schwerpunkt des Trägheitskörpers verdrehbaren Sensor ist ein Sensorhebel mit einem Kappenabschnitt vorteilhaft, der den Trägheitskörper bedeckt und eine Außenfläche mit einer Rundung hat, vorzugsweise mit der Rundung einer imaginären Kugel, deren Mittelpunkt mit dem Mittelpunkt oder Schwerpunkt des Trägheitskörpers zusammenfällt. Dadurch bleibt bei einer Verdrehung des Sensors in der Aufnahmevorrichtung die räumliche Lage des Kontaktpunkts zwischen Sensorhebel und Zwischenhebel unbeeinflusst, zumindest solange sich die beiden Hebel noch gegenüberliegen.

Damit der Sensor seine je nach Anforderung einmal eingestellte Orientierung in der Aufnahmevorrichtung während der Lebensdauer des Gurtaufrollers nicht nachträglich ungewollt verändert, weist/weisen der Sensor und oder die Aufnahmevorrichtung Mittel auf, mit denen der Sensor unabhängig von der räumlichen Orientierung in der Aufnahmevorrichtung dauerhaft fixierbar ist.

Die Erfindung schafft auch einen Gurtaufroller für einen Fahrzeug-Sicherheitsgurt mit einer erfindungsgemäßen Baugruppe. Die Aufnahmevorrichtung ist mit dem Sensor lagefest an einen Rahmen des Gurtaufrollers gekoppelt, in dem eine Gurtspule des Gurtaufrollers drehbar gelagert ist. Je nach Einbaulage des Gurtaufrollers im Fahrzeug kann dann die relative Einbaulage des Sensors angepasst werden.

Weitere Merkmale und Vorteile der Erfindung ergeben sich aus der nachfolgenden Beschreibung und aus den beigefügten Zeichnungen, auf die Bezug genommen wird. In den Zeichnungen zeigen:
- Figur 1 eine Seitenansicht einer erfindungsgemäßen Baugruppe;
- Figur 2 eine perspektivische Ansicht der Baugruppe aus Figur 1;
- Figur 3 ein vergrößertes Detail aus Figur 1;
- Figur 4 eine perspektivische Ansicht des Details aus Figur 3; und
- Figuren 5 bis 16 Seitenansichten bzw. perspektivische Ansichten der Baugruppe mit verschiedenen Einbaulagen des Sensors.

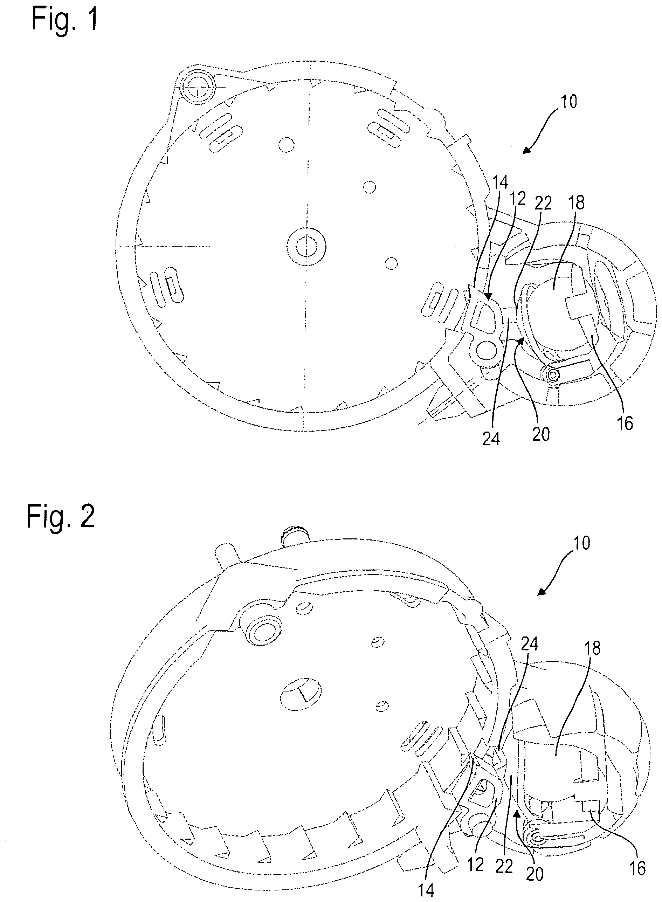

In den Figuren 1 und 2 ist eine Aufnahmevorrichtung für einen fahrzeugsensitiven Sensor dargestellt. Die Aufnahmevorrichtung 10 und der Sensor sind Teil eines Gurtaufrollers für einen Fahrzeug-Sicherheitsgurt mit einer Gurtspule und einem Rahmen, bei dem die Gurtspule aus einer Freigabestellung, in der sie sich frei im Rahmen drehen kann, in eine Blockierstellung verschoben werden kann, in der eine Blockierverzahnung der Gurtspule in Blockierzähne am Rahmen eingreift. Dieses Blockierkonzept ist dem Fachmann unter dem Namen "floating spool"-Konzept bekannt. Die Aufnahmevorrichtung ist in diesem Fall ein Schwenkhebel des Gurtaufrollers, in dem die Gurtspule gelagert ist. Der Schwenkhebel kann darüber hinaus mit einer Innenverzahnung für die gurtbandsensitive Sperrung versehen sein.

Für eine fahrzeugsensitive Blockierung der Gurtspule ist es bei diesem Gurtaufroller-Typ wesentlich, dass ein schwenkbar an der Aufnahmevorrichtung gelagerter Zwischenhebel 12 aus der in den Figuren 1 und 2 gezeigten Freigabestellung, in der er nicht in eine Steuerverzahnung der Gurtspule eingreift, so verschwenkt werden kann, dass er, genauer gesagt seine Spitze 14, in die Steuerverzahnung eingreift. Zum Verschwenken des Zwischenhebels 12 ist ein fahrzeugsensitiv ansprechender Sensor mit einem Sensorgehäuse 16, einem Trägheitskörper 18, hier eine Kugel, und einem durch den Trägheitskörper 18 betätigbaren Sensorhebel 20 vorgesehen.

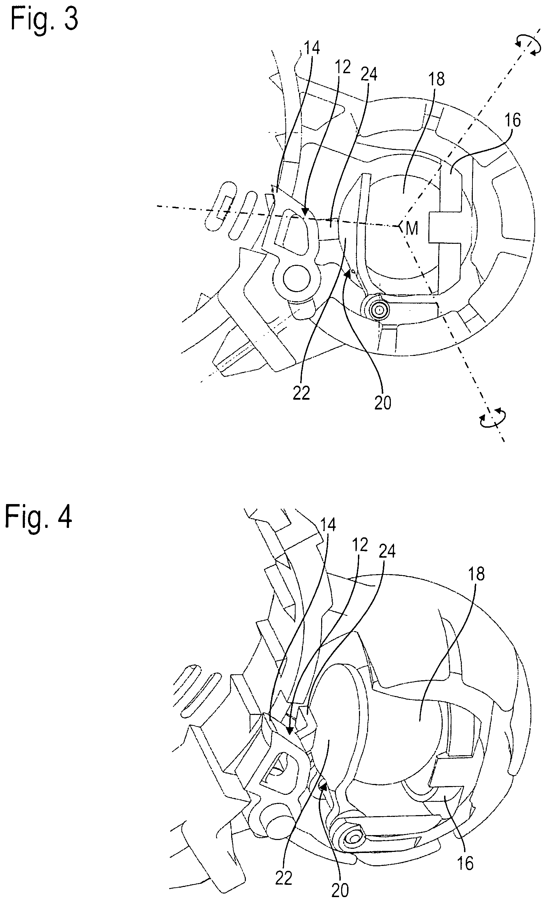

Der Sensor ist in den Figuren 3 und 4 vergrößert dargestellt. Der Trägheitskörper 18 ist im Sensorgehäuse 16 aufgenommen und nimmt darin eine stabile Ruhelage ein. Der Trägheitskörper 18 kann durch äußere Kräfte infolge einer Erschütterung, einer starken Verzögerung oder dergleichen aus der Ruhelage heraus bewegt werden. Im vorliegenden Fall eines kugelförmigen Trägheitskörpers 18 bedeutet dies eine Verschiebung des Mittelpunkts M des Trägheitskörpers 18 (der mit dem Schwerpunkt zusammenfällt). Bei anderen Trägheitskörpern, wie sie z. B. bei "Standing Man"- oder "Glocken"-Sensoren eingesetzt werden, erfolgt die Bewegung aus der Ruhelage in Form eines Kippens oder Verschwenkens um eine Achse.

Der Trägheitskörper 18 ist teilweise von einem Kappenabschnitt 22 des Sensorhebels 20 bedeckt. Der Sensorhebel 20 ist wiederum so am Sensorgehäuse 16 oder an einem fest mit diesem verbundenen Lagerabschnitt gelagert, dass durch eine Bewegung des Trägheitskörpers 18 aus dessen Ruhelage heraus der Kappenabschnitt 22 definiert ausgelenkt (verschwenkt) wird. Die Form des Kappenabschnitts 22, insbesondere dessen sphärische Außenfläche, ist so gewählt, dass die Kappe als Teil einer (imaginären) Hohlkugel betrachtet werden kann, die denselben Mittelpunkt wie der Trägheitskörper 18 hat.

Wie am besten in Figur 4 erkennbar ist, liegt ein Kontaktabschnitt 24 des Zwischenhebels 12 auf dem Kappenabschnitt 22 des Sensorhebels 20 auf. Somit ist der Zwischenhebel 12 an den Sensorhebel 20 gekoppelt und wird durch dessen Auslenkung in der gewünschten Weise verschwenkt, um dadurch eine Blockierung der Gurtspule auszulösen.

Von besonderer Bedeutung ist die Art der Aufnahme des Sensors in der relativ zum fertig montierten Gurtaufroller unbeweglichen Aufnahmevorrichtung 10. Die Bauteile Trägheitskörper 18, Sensorgehäuse 16 und Sensorhebel 20 bilden eine Einheit, die in verschiedenen Orientierungen in die Aufnahmevorrichtung 10 eingebaut werden kann. Die innere geometrische Gestaltung der Aufnahmevorrichtung 10 und die äußere geometrische Gestaltung des Sensors sind so aufeinander abgestimmt, dass der Sensor vor einer endgültigen Fixierung in der Aufnahmevorrichtung in verschiedenen räumlichen Orientierungen platziert werden kann. Die grundsätzlich möglichen Orientierungen ergeben sich durch Drehungen des Sensors um Raumachsen, die durch den Mittelpunkt M des Trägheitskörpers verlaufen (siehe Figur 4).

Hierzu ist bei der in den Figuren gezeigten bevorzugten Ausführungsform vorgesehen, dass das Sensorgehäuse 16 einen oder mehrere Abschnitte mit einer Außenfläche aufweist, die die Rundung einer (imaginären) Kugel aufweist, deren Mittelpunkt mit dem Mittelpunkt M des Trägheitskörpers 18 zusammenfällt. Gleiches gilt für eine Innenfläche eines oder mehrerer Abschnitte der Aufnahmevorrichtung 10, d. h. auch diese Fläche weist die Rundung einer (imaginären) Kugel auf, deren Mittelpunkt dem Mittelpunkt M des Trägheitskörpers entspricht. Solange der Sensor mit der sphärischen Außenfläche auf der sphärischen Innenfläche der Aufnahmevorrichtung zu liegen kommt, ist gewährleistet, dass der Mittelpunkt des Trägheitskörpers 18 (in seiner Ruhelage) immer dieselbe vorbestimmte Position relativ zur Aufnahmevorrichtung 10 einnimmt.

Dank der sphärischen Flächen ist grundsätzlich eine stufenlose Verdrehung des Sensors um alle Raumachsen möglich. Nach Einstellung der gewünschten Einbaulage wird der Sensor in der Aufnahmevorrichtung 10 dauerhaft fixiert.

Begrenzt sind die möglichen Einbaulagen lediglich dadurch, dass die für die Funktion wesentliche Kopplung des Sensorhebels 20 mit dem Zwischenhebel 12 gewährleistet sein muss. Im vorliegenden Fall bedeutet dies, dass der Kappenabschnitt 22 des Sensorhebels 20 mit dem gegenüberliegenden Kontaktabschnitt 24 des Zwischenhebels 12 in Kontakt steht und eine Auslenkung des Sensorhebels 20 ein ausreichendes Verschwenken des Zwischenhebels 12 bewirkt.

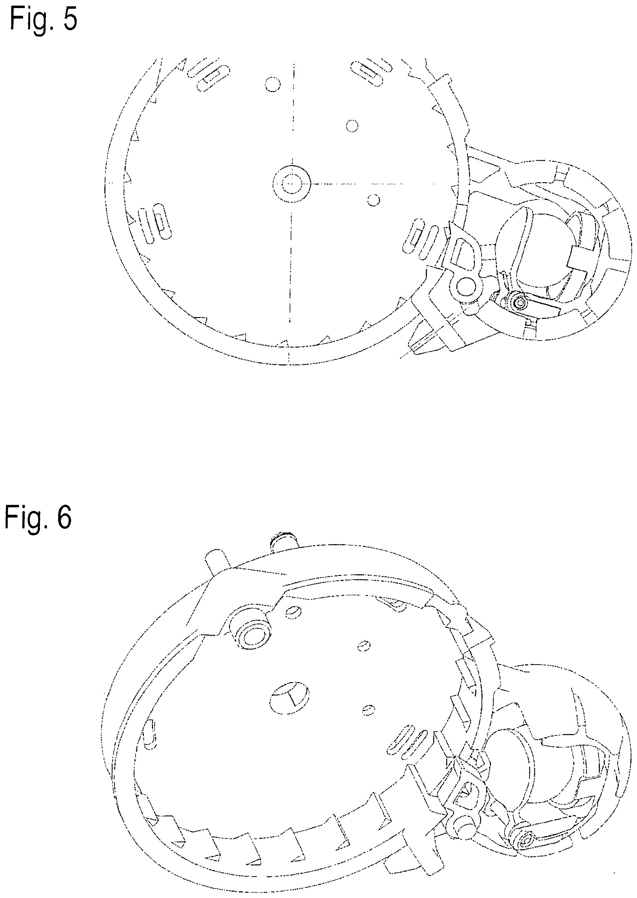

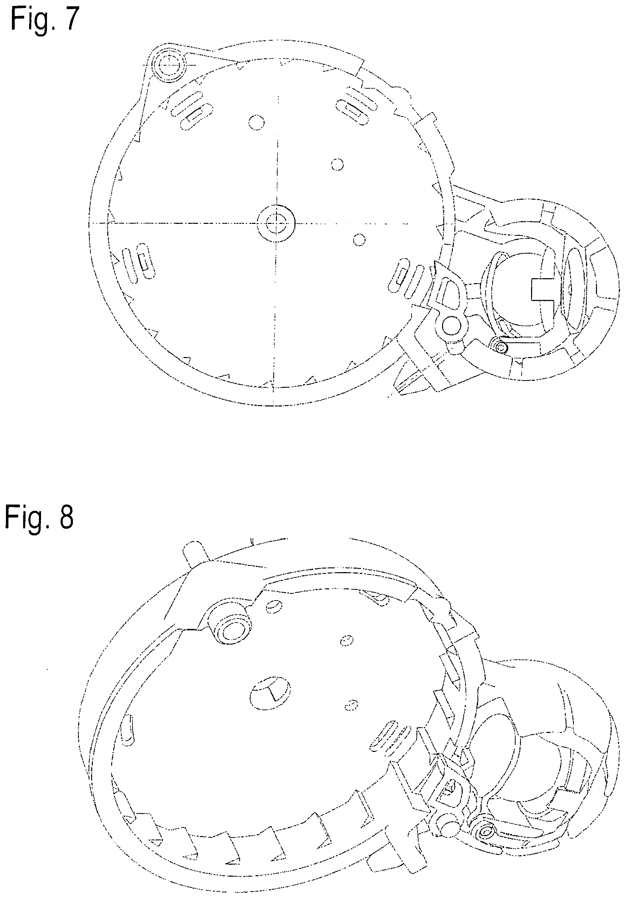

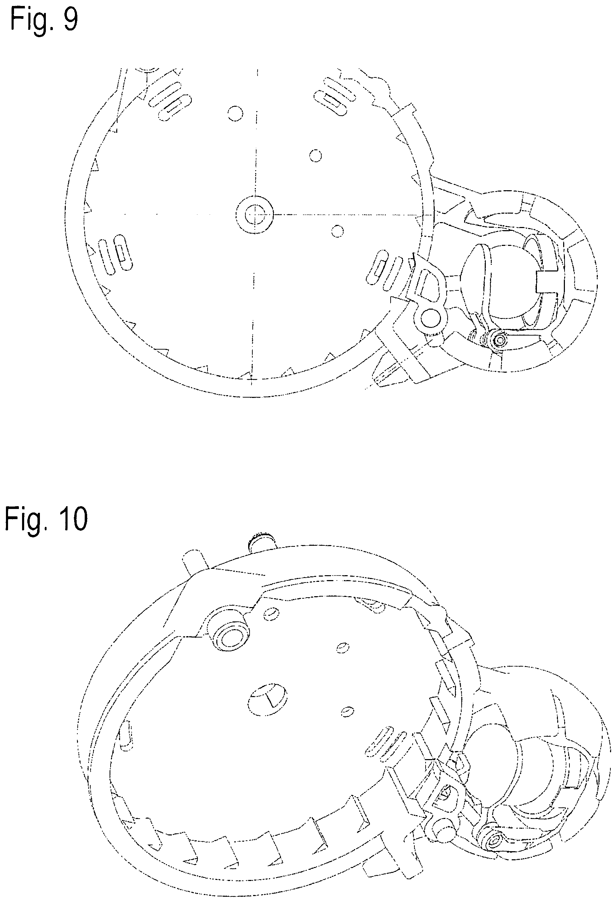

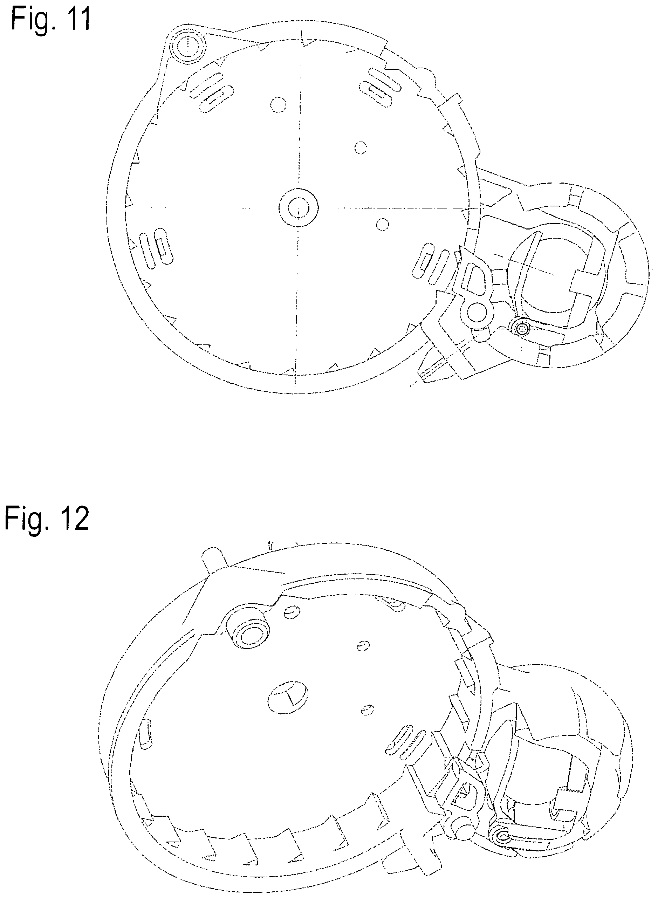

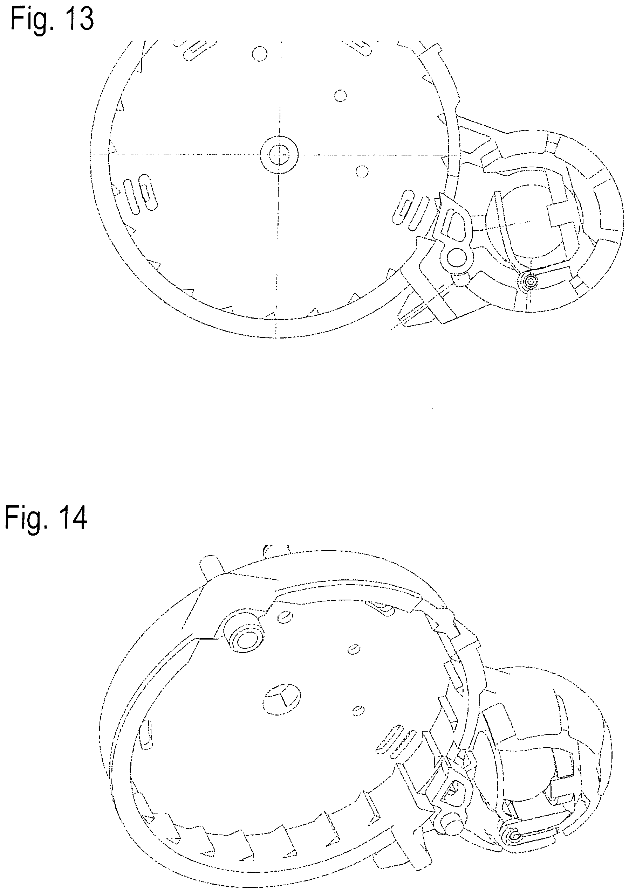

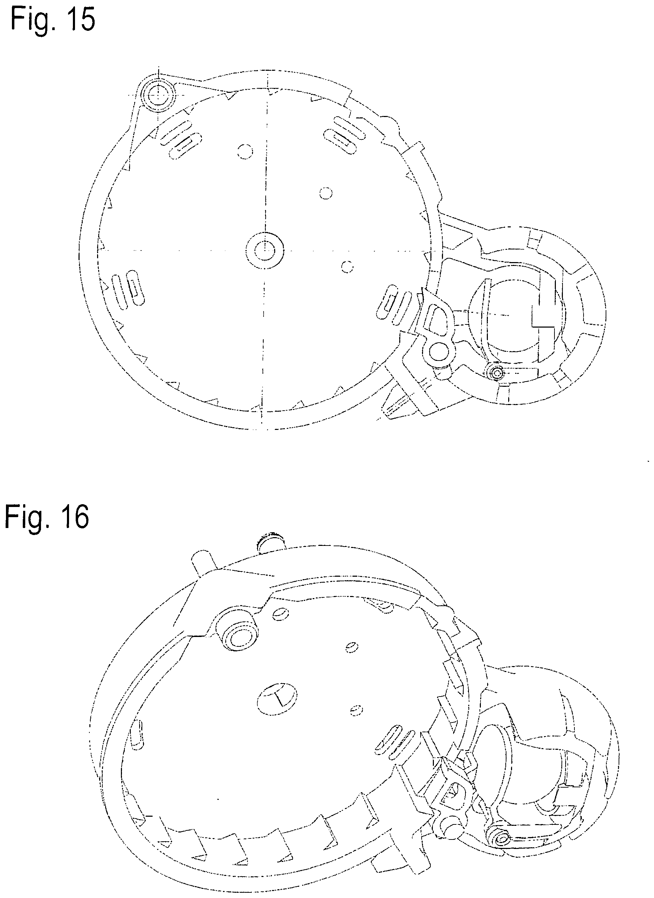

In den Figuren 5 bis 16 sind beispielhaft verschiedene mögliche Einbaulagen des Sensors in der Aufnahmevorrichtung 10 gezeigt. Aus diesen Figuren geht hervor, dass der Kontaktabschnitt 24 des Zwischenhebels 12 und der Kappenabschnitt 22 des Sensorhebels 20 so gestaltet sind, dass eine Verdrehung des Sensors in der Aufnahmevorrichtung 10 - innerhalb der zuvor definierten Grenzen - keinen Einfluss auf die Lage des Zwischenhebels 12 hat, d. h. in keiner zulässigen Einbaulage ist ein Spalt zwischen Sensorhebel 20 und Zwischenhebel 12 oder eine signifikante Auslenkung des Zwischenhebels 12 im Vergleich zu einer anderen Einbaulage vorhanden, was unterschiedlich große Spalte zwischen der Spitze 14 des Zwischenhebels 12 und der Steuerverzahnung der Gurtspule zur Folge hätte.

Es sind auch andere geometrische Gestaltungen des Sensors und der Aufnahmevorrichtung 10 denkbar, die um den Mittelpunkt M des Trägheitskörpers 18 verdrehte Orientierungen des Sensors zulassen.

Die beschriebene Baugruppe kann auch in Gurtaufrollern eingesetzt werden, die nicht auf dem "floating spool"-Konzept basieren, sondern eine unverschiebliche Gurtspule und eine separate Kupplungsscheibe mit einer Sperrverzahnung aufweisen.

### Bezugszeichenliste

- 10: Aufnahmevorrichtung
- 12: Zwischenhebel
- 14: Spitze
- 16: Sensorgehäuse
- 18: Trägheitskörper
- 20: Sensorhebel
- 22: Kappenabschnitt
- 24: Kontaktabschnitt

## Patentansprüche

1. Baugruppe für einen Gurtaufroller, mit einer Gurtspule und einem Rahmen,
mit einem fahrzeugsensitiven Sensor bestehend aus einem Sensorgehäuse (16), einem Trägheitskörper (18) und einem Sensorhebel (20), und
einer Aufnahmevorrichtung (10) für das Sensorgehäuse (16), **dadurch gekennzeichnet, dass**
das Sensorgehäuse (16) eine Außenfläche mit einer Rundung einer Kugel und die Aufnahmevorrichtung (10) eine innere Aufnahmefläche mit einer Rundung einer Kugel aufweisen, die zusammenwirken und so aufeinander abgestimmt sind, dass das Sensorgehäuse (16) in verschiedenen räumlichen Orientierungen und Raumachsen gedreht in die Aufnahmevorrichtung (10) eingebaut werden kann.

2. Baugruppe nach Anspruch 1, **dadurch gekennzeichnet, dass** der Sensor einen Trägheitskörper (18) aufweist, der infolge von außen einwirkender Kräfte aus einer Ruhelage heraus bewegt werden kann, und die geometrische Gestaltung der Aufnahmevorrichtung (10) eine innere Aufnahmefläche hat, die bezüglich des Mittelpunkts (M) oder Schwerpunkts oder einer Kipp- oder Schwenkachse des Trägheitskörpers (18) in dessen Ruhelage symmetrisch ist.

3. Baugruppe nach Anspruch 2, **dadurch gekennzeichnet, dass** das Sensorgehäuse (16), eine Außenfläche hat, die bezüglich des Mittelpunkts (M) oder Schwerpunkts oder einer Kipp- oder Schwenkachse des Trägheitskörpers (18) in dessen Ruhelage symmetrisch ist.

4. Baugruppe nach Anspruch 2 oder 3, **dadurch gekennzeichnet, dass** die Rundungen der inneren Aufnahmefläche der Aufnahmevorrichtung (10) und die der Außenfläche des Sensorgehäuses (16) so ausgebildet sind, dass deren Mittelpunkt mit dem Mittelpunkt oder Schwerpunkt des Trägheitskörpers zusammenfällt.

5. Baugruppe nach einem der vorhergehenden Ansprüche, **dadurch gekennzeichnet, dass** an der Aufnahmevorrichtung ein Zwischenhebel (12) schwenkbar gelagert ist, der durch eine Bewegung des Trägheitskörpers (18) verschwenkbar ist.

6. Baugruppe nach Anspruch 5, **dadurch gekennzeichnet, dass** zwischen dem Trägheitskörper (18) und dem Zwischenhebel (12) ein Sensorhebel (20) angeordnet ist, der an einem den Trägheitskörper (18) aufnehmenden Sensorgehäuse (16) angebracht und relativ zum Sensorgehäuse (16) schwenkbar gelagert ist.

7. Baugruppe nach Anspruch 6, **dadurch gekennzeichnet, dass** der Sensorhebel (20) einen Kappenabschnitt (22) aufweist, der den Trägheitskörper (18) bedeckt und eine Außenfläche mit einer Rundung hat, vorzugsweise mit der Rundung einer imaginären Kugel, deren Mittelpunkt mit dem Mittelpunkt (M) oder Schwerpunkt des Trägheitskörpers zusammenfällt.

8. Baugruppe nach einem der vorhergehenden Ansprüche, **dadurch gekennzeichnet, dass** der Sensor und oder die Aufnahmevorrichtung (10) Mittel aufweisen, mit denen der Sensor unabhängig von der räumlichen Orientierung in der Aufnahmevorrichtung (10) dauerhaft fixierbar ist.

9. Gurtaufroller für einen Fahrzeug-Sicherheitsgurt, **gekennzeichnet durch** eine Baugruppe nach einem der vorhergehenden Ansprüche, wobei die Aufnahmevorrichtung (10) mit dem Sensor lagefest an einen Rahmen des Gurtaufrollers gekoppelt ist, in dem eine Gurtspule des Gurtaufrollers drehbar gelagert ist.

## Claims

1. A subassembly for a belt retractor comprising a belt reel and a frame,
comprising a vehicle-sensitive sensor consisting of a sensor housing (16), an inertial member (18) and a sensor lever (20), as well as
a holding device (10) for the sensor housing (16),
**characterized in that**
the sensor housing (16) includes an outer surface having a sphericity of a ball and the holding device (10) includes an inner holding surface having a sphericity of a ball which are interacting and are adapted to each other so that the sensor housing (16) can be mounted into the holding device (10) while being rotated in different spatial orientations and spatial axes.

2. The subassembly according to claim 1, **characterized in that** the sensor includes an inertial member (18) which, due to forces acting from outside, can be moved out of an idle state, and the geometric configuration of the holding device (10) includes an inner holding surface which is symmetrical relative to the center (M) or the center of gravity or a tilting or pivoting axis of the inertial member (18) in the idle state thereof.

3. The subassembly according to claim 2, **characterized in that** the sensor housing (16) includes an outer surface which is symmetrical relative to the center (M) or the center of gravity or a tilting or pivoting axis of the inertial member (18) in the idle state thereof.

4. The subassembly according to claim 2 or 3, **characterized in that** the sphericities of the inner holding surface of the holding device (10) and those of the outer surface of the sensor housing (16) are configured so that the center thereof coincides with the center or the center of gravity of the inertial member.

5. The subassembly according to any one of the preceding claims, **characterized in that** at the holding device an intermediate lever (12) is pivot-mounted which may be pivoted by a movement of the inertial member (18).

6. The subassembly according to claim 5, **characterized in that** a sensor lever (20) which is attached to a sensor housing (16) accommodating the inertial member (18) and is pivot-mounted relative to the sensor housing (16) is arranged between the inertial member (18) and the intermediate lever (12)

7. The subassembly according to claim 6, **characterized in that** the sensor lever (20) includes a cap portion (22) covering the inertial member (18) and having an outer surface including a sphericity, preferably including the sphericity of an imaginary ball, the center of which coincides with the center (M) or the center of gravity of the inertial member.

8. The subassembly according to any one of the preceding claims, **characterized in that** the sensor and/or the holding device (10) include means by which the sensor can be permanently fixed in the holding device (10) independently of the spatial orientation.

9. A belt retractor for a vehicle seat belt, **characterized by** a subassembly according to any one of the preceding claims, wherein the holding device (10) is coupled with the sensor while being fixed in position to a frame of the belt retractor in which a belt reel of the belt retractor is rotatably supported.

## Revendications

1. Ensemble pour un rétracteur de ceinture, avec une bobine de ceinture et un châssis, avec un capteur sensible aux mouvements du véhicule constitué d'un boîtier de capteur (16), d'un corps à inertie (18) et d'un levier de capteur (20), et
un réceptacle (10) pour le boîtier de capteur (16), **caractérisé en ce que**
le boîtier de capteur (16) possède une surface extérieure avec la courbure d'une sphère et le réceptacle (10) possède une surface de réception interne avec la courbure d'une sphère, celles-ci se correspondent pour fonctionner ensemble et sont appairées, de sorte que le boîtier de capteur (16) peut être installé libre en rotation dans différentes orientations et axes spatiaux dans le réceptacle (10).

2. Ensemble selon la revendication 1, **caractérisé en ce que** le capteur possède un corps à inertie (18), qui peut être déplacé par suite de forces externes agissant à partir d'une position de repos, et pour lequel la configuration géométrique du réceptacle (10) possède une surface de réception interne, qui est symétrique par rapport au centre (M) ou par rapport au centre de gravité ou par rapport à un axe de basculement ou de pivotement du corps à inertie (18) dans sa position de repos.

3. Ensemble selon la revendication 2, **caractérisé en ce que** le boîtier de capteur (16) possède une surface externe, qui est symétrique rapport au centre (M) ou par rapport au centre de gravité ou par rapport à un axe de basculement ou de pivotement du corps à inertie (18) dans sa position de repos.

4. Ensemble selon la revendication 2 ou 3, **caractérisé en ce que** les courbes de la surface de réception interne du réceptacle (10) et celle de la surface extérieure du boîtier de capteur (16) sont formées de telle sorte que leur centre coïncide avec le centre ou le centre de gravité du corps à inertie.

5. Ensemble selon l'une des revendications précédentes, **caractérisé en ce que** sur le réceptacle un levier intermédiaire (12) est monté pivotant, lequel peut pivoter par un mouvement du corps à inertie (18).

6. Ensemble selon la revendication 5, **caractérisé en ce qu'**entre le corps à inertie (18) et le levier intermédiaire (12) est disposé un levier de capteur (20), lequel est relié à un corps d'inertie (18) recevant le boîtier de capteur (16) et est monté pivotant par rapport au boîtier de capteur (16).

7. Ensemble selon la revendication 6, **caractérisé en ce que** le levier de capteur (20) comporte une partie couvrante (22), qui recouvre le corps à inertie (18) et présente une surface extérieure arrondie, de préférence arrondie d'une sphère imaginaire dont le centre coïncide avec le point central (M) ou le centre de gravité du corps à inertie.

8. Ensemble selon l'une des revendications précédentes, **caractérisé en ce que** le capteur et / ou le réceptacle (10) présentent des moyens avec lesquels le capteur est fixé de manière permanente indépendamment de l'orientation spatiale dans le réceptacle (10).

9. Enrouleur de ceinture pour une ceinture de sécurité de véhicule, **caractérisé par** un ensemble selon l'une des revendications précédentes, dans lequel le réceptacle (10) est couplé fixement au capteur sur un châssis du rétracteur de ceinture, dans lequel une bobine de ceinture du rétracteur de ceinture est montée libre en rotation.
